# FASCICULE DE BREVET EUROPEEN

(11) **EP 0 536 017 B1**
(45) Date de publication et mention de la délivrance du brevet: **03.01.1996**
(21) Numéro de dépôt: 92402558.8
(22) Date de dépôt: 17.09.1992
(51) Int. Cl.: C02F 3/30, C02F 3/06

(54) **Procédé et dispositif pour l'épuration biologique des eaux résiduaires**
Verfahren und Anlage für die biologische Abwasserbehandlung
Process and installation for biological waste water treatment

(30) Priorité: 02.10.1991 FR 9112133
(43) Date de publication de la demande: 07.04.1993
(73) Titulaire: DEGREMONT, F-92508 Rueil-Malmaison Cédex (FR)
(72) Inventeur: Rovel, Jean-Marie, F-92500 Rueil Malmaison (FR)
(74) Mandataire: Armengaud Ainé, Alain

(56) Documents cités:
- DE-A- 3 215 404
- DE-A- 3 916 679
- DE-A- 3 934 958

## Description

La présente invention est relative à un procédé et un dispositif pour l'épuration biologique des eaux résiduaires.

Ainsi qu'on le sait l'épuration biologique des eaux résiduaires concerne essentiellement l'élimination de la pollution carbonée caractérisée globalement par la demande biologique en oxygène, ou DBO, et l'élimination de la pollution azotée.

L'élimination de la pollution carbonée est réalisée en présence d'oxygène par des bactéries dites hétérotrophes, c'est-à-dire des bactéries qui utilisent des substances nutritives qu'elles transforment en matériaux plus simples, l'énergie libérée servant aux besoins des cellules. Dans la grande majorité des cas, l'azote organique contenu dans l'eau brute est transformé en ammoniaque au cours de cette opération.

L'élimination de la pollution azotée s'effectue en deux stades :
- La nitrification, c'est-à-dire l'oxydation de l'ammoniaque en nitrites, par des bactéries du genre nitrosomonas, puis en nitrates par des bactéries du type nitrobacter toutes deux du type autotrophe ;
- La dénitrification au cours de laquelle s'effectue la transformation de l'azote nitrique en azote gazeux, par des bactéries hétérotrophes.
- La nitrification a lieu en présence d'oxygène, comme l'étape d'élimination de la pollution carbonée ainsi qu'on la vu ci-dessus, et elle met en oeuvre des bactéries autotrophes qui synthétisent elles-mêmes leurs facteurs de croissance alors que la dénitrification utilise des bactéries hétérotrophes, en anoxie, c'est-à-dire dans un milieu pratiquement exempt d'oxygène dissous.
Il est connu que les bactéries peuvent être mises en oeuvre selon de nombreux procédés que l'on peut regrouper en deux familles :
- les procédés par cultures libres dans lesquels la flore bactérienne épuratrice est contenue dans une suspension boueuse nommée 〈〈 boues activées 〉〉 ;
- les procédés par cultures fixées dans lesquels les bactéries se fixent sur un support solide par l'intermédiaire d'une matière gélatineuse à base d'exopolymères qu'elles secrètent, et à l'intérieur de laquelle elles ont une certaine mobilité.

Ainsi, DE-A-3 215 404 décrit un procédé d'épuration biologique d'eaux usées contenant des phosphates selon lequel les eaux usées sont amenées dans des zones de réaction où elles sont traitées à l'aide d'une biomasse fixée selon des cycles aérobies, anaérobies et anoxiques en vue de l'élimination des pollutions phosphatées et azotées.

Quelque soit le procédé choisi, il résulte des conditions propres à chaque stade de l'épuration que l'on doit prévoir un appareil particulier pour chaque fonction, soit, de façon schématique un seul appareil si on se contente de réduire la demande biologique en oxygène (DBO), soit trois appareils en série pour un traitement complet.

Quelque soit le cas, une installation d'épuration biologique des eaux résiduaires est constituée d'un ou de plusieurs appareils dimensionnés pour traiter un certain débit (appelé débit nominal) et elle ne peut supporter sur le plan hydraulique et sur le plan épuratoire que des augmentations limitées de ce débit (jusqu'à + 20% environ) sous peine d'altérer gravement les rendements d'épuration et surtout ceux de la nitrification. En particulier, une telle installation ne peut pas supporter les pluies d'orage qui portent temporairement le débit à une valeur plusieurs fois supérieure au débit nominal, même au prix d'une diminution de l'épuration qui pourrait cependant être acceptable dans la mesure où elle est elle-même temporaire.

Afin de faire face à cette augmentation de débit, on est donc contraint d'utiliser par temps de pluie des déversoirs dits déversoirs d'orage qui renvoient au mileu naturel, sans traitement, le débit excédentaire par rapport au débit nominal choisi, ce qui présente bien entendu des inconvénients notamment en ce qui concerne la préservation de l'environnement.

La présente invention s'est donc fixée pour objectif de remédier à ces inconvénients en apportant un procédé et une installation capables soit d'assurer un traitement complet de la pollution carbonée et de la pollution azotée au débit nominal, soit l'élimination de la demande biologique en oxygène, seulement au débit d'orage.

En conséquence, cette invention concerne en premier lieu, un procédé d'épuration biologique des eaux résiduaires mettant en oeuvre des biofiltres à cultures fixées, permettant soit d'assurer un traitement complet de la pollution carbonée et de la pollution azotée au débit nominal, soit l'élimination de la demande biologique en oxygène ou DBO seulement lors d'une augmentation importante du débit nominal, notamment en cas de pluies,
caractérisé en ce que,
au débit nominal :
- l'eau à traiter passe par les biofiltres à cultures fixées, fonctionnant en série, assurant l'élimination de la DBO, la dénitrification et la nitrification ; en cas d'une augmentation importante du débit nominal :
- on alimente en eau brute lesdites cultures fixées, travaillant normalement en dénitrification, en apportant en même temps de l'oxygène dissous pour provoquer une modification du système enzymatique des bactéries de la flore présente dans le film bactérien de la culture afin que les bactéries consommant l'oxygène libre, la culture fixée assure l'élimination de la DBO de l'eau brute et, parallèlement ;
- on alimente en eau brute la culture fixée, travaillant normalement en nitirifcation, pour qu'elle développe une flore hétérotrophe au-dessus de la flore autotrophe devenue inactive, ladite culture fixée étant ainsi affectée à l'élimination de la DBO et,
lors d'un retour à des conditions normales de fonctionnement lors d'une décroissance du débit vers sa valeur nominale :
- on interrompt l'alimentation en oxygène libre de la culture fixée normalement affectée à la dénitrification forçant ainsi les bactéries à restaurer leur système enzymatique initial, c'est-à-dire à revenir à leur fonctionnement initial en dénitrification et,
- on réalise un lavage de la culture fixée normalement affectée à la nitrification, afin d'éliminer la flore hétérotrophe pour faire réapparaître la flore autotrophe assurant ainsi un retour au fonctionnement normal en nitrification..

La procédé selon l'invention repose sur le fait que les bactéries actives en dénitrification (c'est-à-dire dans une culture fixée suivant l'élimination de la pollution carbonée et la nitrification) sont hétérotrophes tout comme les bactéries utilisées pour l'élimination de la DBO. Ainsi, selon le procédé de l'invention, si on alimente cette culture fixée, non plus avec de l'eau provenant de la nitrification, mais directement avec de l'eau brute (eau de pluie ou d'orage), en apportant en même temps de l'oxygène dissous, on provoque une modification du système enzymatique des bactéries qui consomment l'oxygène libre, de préférence à celui qui est lié aux nitrates. Ainsi et selon le procédé de l'invention, on peut affecter à l'élimination de la DBO une culture fixée qui jusqu'alors travaillait en dénitrification.

En retour, si l'on replace la culture fixée après la nitrification en créant une pénurie d'oxygène libre, on force les bactéries à restaurer leur système enzymatique initial (c'est-à-dire à oxyder les matières organiques en utilisant l'oxygène des nitrates présents). On peut donc ainsi ramener la culture fixée à son fonctionnement initial en dénitrification.

On sait par ailleurs que les bactéries actives en nitrification sont autotrophes et ne peuvent donc pas servir à l'élimination de la DBO. Par contre, on a constaté qu'en alimentant une telle culture fixée avec de l'eau brute, on peut développer rapidement une flore hétérotrophe, amenée par l'eau brute elle-même, au dessus de la flore autotrophe, devenue inactive, qu'elle enveloppe. Par ce moyen, on peut, selon l'invention, affecter à l'élimination de la DBO un appareil à culture fixée qui travaillait jusqu'alors en nitrification.

La population de bactéries autotrophes sous- jacente n'est pas détruite et subsiste sur le support. Or il est connu que l'on peut éliminer par lavage l'excès de biofilm formé sur le support d'une culture fixée, c'est-à-dire la couche externe de ce film, tout en laissant les premières couches fortement fixées sur le matériau, surtout si ce dernier présente une surface rugueuse et poreuse. Dans le cas présent, et selon l'invention, un lavage permet donc d'éliminer la flore hétérotrophe et de faire réapparaître la flore autotrophe, ce qui permet donc en replaçant le lit bactérien à sa place initiale dans la chaîne, après l'avoir lavé, de la ramener à son fonctionnement initial en nitrification.

L'invention vise en second lieu une installation permettant de mettre en oeuvre le procédé spécifié ci-dessus. Cette installation se caractérise essentiellement en ce qu'elle comprend
- une installation de prétraitement dessablage, dégrillage et dégraissage alimentée en eau au débit nominal ,
- une installation de décantation conçue de façon à pouvoir fonctionner sans addition de réactifs lorsqu'elle est alimentée au débit nominal après passage de l'eau à traiter dans l'installation de prétraitement et avec addition de réactifs lorsqu'elle est alimentée directement au débit de pointe, c'est-à-dire plusieurs fois supérieur au débit nominal en cas d'orage par exemple ;
- une installation de traitement biologique à cultures fixées sur laquelle passe ensuite l'eau traitée, cette installation comportant des biofiltres assurant l'élimination de la DBO , la dénitrification et la nitrification , normalement montés en série, des moyens permettant de mettre en parallèle lesdits biofiltres lors d'un dépassement du débit nominal et des moyens permettant de réaliser un réglage du débit d'air pour établir des conditions aérobies dans les zones d'anoxie en cas d'augmentation du débit et pour arrêter l'aération des biofiltres en cas de décroissance du débit lors d'un retour au débit nominal et,
- des moyens de détection d'une augmentation massive du débit, notamment en cas d'orage, conçus de façon à déclencher les opérations suivantes :
- mise en route de l'addition des réactifs de la décantation,
- mise en route séquentielle de tous les aérateurs des biofiltres pour établir des conditions aérobies dans les zones d'anoxie de l'installation de traitement biologique et,
- mise en parallèle des biofiltres ;
   ces moyens permettant en outre un retour aux conditions normales de fonctionnement lors d'une décroissance du débit revenant à sa valeur nominale en déclenchant les opérations suivantes :
- remise en série des biofiltres et lavage du biofiltre affecté à la nitrification pour éliminer la flore hétérotrophe et faire apparaître la flore autotrophe ramenant ainsi le lit bactérien à son fonctionnement en nitrification et,
- arrêt de l'aération des biofiltres de dénitrification pour un retour normal à leur fonctionnement.

Ainsi, la présente invention apporte des moyens permettant d'affecter temporairement à l'élimination de la DBO les appareils de dénitrification et de nitrification qui sont normalement placés en série avec un appareil éliminant la DBO. Cette invention s'applique également dans le cas où la dénitrification est effectuée partiellement en tête par recyclage d'eau nitrifiée, pour en améliorer le rendement, et dans le cas où - la dénitrification étant effectuée partiellement en tête - le nombre des appareils en série est ramené de trois à deux étant donné qu'une partie des nitrates peut être renvoyée au milieu naturel.

Compte tenu des conditions particulières de fonctionnement de chacun des stades d'épuration, les volumes des appareils qui y sont affectés diffèrent, et ont dans le cas d'une installation comportant trois appareils, les ordres de grandeur suivants :

| | |
|---|---|
| - Elimination de la DBO | 1 |
| - Nitrification | 2 |
| - Dénitrification | 1 |

On voit donc qu'en utilisant les moyens de l'invention, c'est-à-dire en affectant tous les appareils à l'élimination de la DBO, et en plaçant ces appareils non plus en série mais en parallèle, on obtient une installation ayant un débit quadruple de la précédente. Cette valeur n'est donnée qu'à titre d'exemple non limitatif à la fois parce que les volumes respectifs des appareils peuvent varier, et parce que leur débit peut dépasser en pointe le débit nominal qui est en général calculé avec une marge de sécurité.

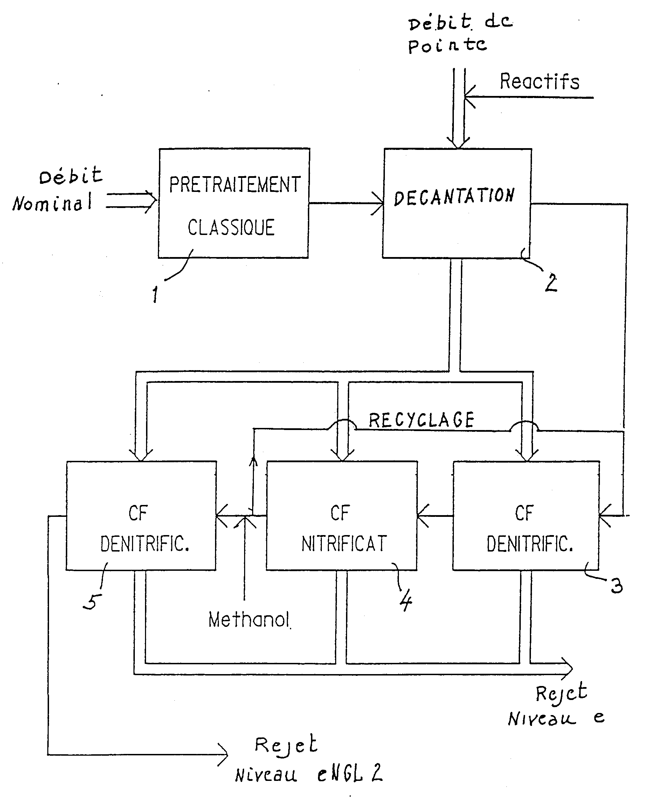

Afin de faciliter la compréhension de la présente invention on a décrit ci-après, à titre d'exemple non limitatif, une installation de traitement d'eau résiduaire urbaine comportant un traitement biologique selon l'invention et on a présenté les résultats obtenus sur l'installation pilote correspondante. Au cours de cette description, on se réfère à la figure unique du dessin annexé qui représente de façon très schématique l'installation conforme à l'invention.

Cette installation peut être alimentée soit au débit nominal à travers une installation classique de prétraitement (dessablage, dégrillage et dégraissage) désignée par la référence 1, soit au débit de pointe (c'est-à-dire notamment en cas d'orage). L'eau brute subit ensuite une décantation primaire (référence 2). Compte tenu des variations importantes de débit, cette décantation est avantageusement effectuée selon l'invention dans un décanteur lamellaire du type commercialisé par la présente titulaire sous la marque "DENSADEG" et qui a fait l'objet du brevet français numéro2.553 082. Ce décanteur qui fonctionne au débit nominal, sans injection de réactifs, en assurant une réduction de 40 à 70% de la teneur en matières en suspension et une réduction de 20 à 35% de la DBO, présente en effet l'avantage de pouvoir fonctionner également à un débit de quatre à six fois plus élevé avec une injection de réactifs (par exemple sels de fer ou d'aluminium et polymère adapté) en assurant alors une réduction de 70 à 90% des matières en suspension et de 75% de la DBO.

L'eau décantée passe ensuite sur une installation de traitement biologique à cultures fixées comprenant ici trois biofiltres désignés respectivement par les références 3,4,5, qui sont de préférence du type commercialisé par la présente titulaire sous la marque "BIOFOR" et qui ont fait l'objet du brevet français numéro 2.580 622. Ces biofiltres comportent un dispositif d'injection d'air qui offre la possibilité d'un arrêt automatique de l'aération sans risque de colmatage progressif, grâce au système de décolmatage dont il est pourvu. Ces appareils sont garnis d'un matériau support des bactéries, de préférence du type commercialisé sous la marque "BIOLITE" par la présente titulaire, dont la porosité et la rugosité sont particulièrement bien adaptées au procédé de lavage utilisé pour réactiver les bactéries nitrifiantes d'un biofiltre après qu'il ait été employé temporairement pour éliminer la DBO.

Le fonctionnement de cette installation conforme à l'invention est le suivant :
1- En régime normal, représenté en traits simples sur la figure, les trois biofiltres 3,4 et 5 sont placés en séries. L'eau brute, au débit nominal passe dans l'installation de prétraitement 1 avant de subir la décantation en 2, sans injection de réactifs. L'eau brute est ensuite délivrée aux biofiltres montés en série 3, 4, 5 de l'installation de traitement biologique. L'eau qui sort du biofiltre de nitrification 4 est recyclée pour une part dans une zone d'anoxie en tête de l'installation (comme on l'a représenté sur la figure) et elle est envoyée pour le reste au biofiltre de dénitrification 5, après avoir reçu une injection de méthanol ou de tout autre produit approprié pour assurer aux bactéries dénitrifiantes de ce dernier biofiltre 5 l'apport carboné qui leur est nécessaire.
2- En cas d'orage précurseur d'une augmentation massive du débit, des moyens automatiques prévus par l'invention (non représentés sur le dessin) permettent, à partir de toute information précise par exemple du type radar, pluviomètre, niveau dans le réseau, etc, d'être prévenu suffisamment à temps (au moins 30 mn et de préférence 1 h à l'avance) de l'arrivée des gros débits. Ces moyens déclenchent alors les opérations suivantes :
   - mise en route de l'addition des réactifs à l'eau brute provenant de ces débits de pointe avant leur traitement dans l'installation de décantation 2 (cette addition s'effectue proportionnellement au débit ou de préférence au flux entrant des matières en suspension), et arrêt de l'injection de méthanol dans l'installation de traitement biologique ; (ref 5)
   - mise en route séquentielle de tous les aérateurs des biofiltres 3, 4, 5 avec réglage au maximum du débit d'air pour établir des conditions aérobies dans les zones d'anoxie, c'est-à-dire sur le biofiltre de dénitrification 5 et éventuellement sur le biofiltre de dénitrification de tête 2 (s'il y a une dénitrification par recyclage en tête).
   - mise en parallèle des biofiltres 3,4, 5 (cette situation est représentée en traits doubles sur le dessin) en commençant par deux biofiltres en tête puis un troisième, en fonction de la montée du débit. En cas de débit intermédiaire, on peut conserver le biofiltre de nitrification 4 en série, de façon à assurer une nitrification partielle.
3 - Lors d'une décroissance du débit détectée par les moyens prévus à cet effet par l'invention, on procède successivement aux opérations suivantes :
   - remise en série des biofiltres 3,4, 5 et lavage du biofiltre 4 affecté à la nitrification ;
   - arrêt de l'aération du troisième biofiltre 5 dès l'apparition des nitrates et remise en route de l'injection de méthanol en fonction de la quantité de nitrates mesurée à la sortie du second biofiltre 4 et
   - remise en service du recyclage de l'eau, sortant du biofiltre de nitrification 4, à l'entrée du biofiltre de tête 3 et arrêt de l'aération de ce dernier.

Ainsi l'installation est ramenée à ses conditions de fonctionnement en régime normal décrit ci-dessus.

On a donné ci-après les résultats qui ont été obtenus sur l'installation pilote réalisée conformément à la présente invention.

Les essais sur ce pilote ont été effectués aux débits suivants :
- 4 m3/h correspondant au temps sec ;
- 23 m3/h correspondant au temps d'orage,
sur une chaine de traitement biologique comportant trois biofiltres en série dans le premier cas et en parallèle dans le second. Les volumes de ces biofiltres étaient respectivement les suivants (dans l'ordre des biofiltres travaillant en série) : 3 m3 ; 4,8 m3 et 1,8 m3.

Les eaux à traiter, représentatives de la région parisienne avaient les caractéristiques suivantes :

| | Temps sec | Temps d'orage |
|---|---|---|
| Matières en suspension (MES) mg/l | 220/250 | 200 |
| DBO mg/l | 175/200 | 160 |
| Azote NTK (organique + ammoniacal) mg/l | 35/45 | 20/25 |
| Après traitement on a obtenu les résultats suivants : | | |
| Matières en suspension mg/l | 4/10 | 10/20 |
| DBO mg/l | 3/10 | 15/27 |
| Azote NTK mg/l | 1/3 | - |
| Azote global mg/l | 2/5 | - |

Les résultats mentionnés ci-dessus et qui ont été mesurés sur des échantillons moyens correspondant à deux heures de fonctionnement montrent qu'on peut obtenir une eau épurée :
- satisfaisant au niveau français eNGL2, ou au niveau européen "grande station en zone sensible" au débit nominal en temps normal ;
- satisfaisant au niveau français e par temps d'orage ; sachant que ces niveaux correspondent à :

| | |
|---|---|
| - Niveau e | DBO < 30 MES < 30 |
| -Niveau eNGL2 | Azote global < 20 |

Les résultats ont également permis de constater qu'au retour à des conditions normales après un orage, la nitrification est rétablie à 80% quatre heures après le lavage du biofiltre 4 affecté à la nitrification et la remise en série des biofiltres, et qu'on atteint le niveau européen en moins de huit heures.

Il demeure bien entendu que la présente invention n'est pas limitée aux exemples de mise en oeuvre ou de réalisation décrits et mentionnés ici mais qu'elle en englobe toutes les variantes.

## Revendications

1. Procédé d'épuration biologique des eaux résiduaires mettant en oeuvre des biofiltres à cultures fixées, permettant soit d'assurer un traitement complet de la pollution carbonée et de la pollution azotée au débit nominal, soit l'élimination de la demande biologique en oxygène ou DBO seulement lors d'une augmentation importante du débit nominal, notamment en cas de pluies,
caractérisé en ce que,
au débit nominal :
- l'eau à traiter passe par les biofiltres à cultures fixées, fonctionnant en série, assurant l'élimination de la DBO, la dénitrification et la nitrification ; en cas d'une augmentation importante du débit nominal :
- on alimente en eau brute lesdites cultures fixées, travaillant normalement en dénitrification, en apportant en même temps de l'oxygène dissous pour provoquer une modification du système enzymatique des bactéries de la flore présente dans le film bactérien de la culture afin que les bactéries consommant l'oxygène libre, la culture fixée assure l'élimination de la DBO de l'eau brute et, parallèlement ;
- on alimente en eau brute la culture fixée, travaillant normalement en nitirifcation, pour qu'elle développe une flore hétérotrophe au-dessus de la flore autotrophe devenue inactive, ladite culture fixée étant ainsi affectée à l'élimination de la DBO et,
lors d'un retour à des conditions normales de fonctionnement lors d'une décroissance du débit vers sa valeur nominale :
- on interrompt l'alimentation en oxygène libre de la culture fixée normalement affectée à la dénitrification forçant ainsi les bactéries à restaurer leur système enzymatique initial, c'est-à-dire à revenir à leur fonctionnement initial en dénitrification et,
- on réalise un lavage de la culture fixée normalement affectée à la nitrification, afin d'éliminer la flore hétérotrophe pour faire réapparaître la flore autotrophe assurant ainsi un retour au fonctionnement normal en nitrification.

2. Installation d'épuration biologique des eaux résiduaires pour la mise en oeuvre du procédé selon la revendication 1 caractérisé en ce qu'elle comprend :
- une installation de prétraitement (1) dessablage, dégrillage et dégraissage alimentée en eau au débit nominal ;
- une installation de décantation (2) conçue de façon à pouvoir fonctionner sans addition de réactifs lorsqu'elle est alimentée au débit nominal après passage de l'eau à traiter dans l'installation de prétraitement (1) et avec addition de réactifs lorsqu'elle est alimentée directement au débit de pointe c'est-à-dire plusieurs fois supérieur au débit nominal en cas d'orage par exemple ;
- une installation de traitement biologique à cultures fixées sur laquelle passe ensuite l'eau traitée, cette installation comportant des biofiltres assurant l'élimination de la DBO (3), la dénitrification (3-5) et la nitrification (4), normalement montés en série, des moyens permettant de mettre en parallèle lesdits biofiltres lors d'un dépassement du débit nominal et des moyens permettant de réaliser un réglage du débit d'air pour établir des conditions aérobies dans les zones d'anoxie en cas d'augmentation du débit et pour arrêter l'aération des biofiltres en cas de décroissance du débit lors d'un retour au débit nominal et,
- des moyens de détection d'une augmentation massive du débit, notamment en cas d'orage, conçus de façon à déclencher les opérations suivantes :
- mise en route de l'addition des réactifs de la décantation (2) ;
- mise en route séquentielle de tous les aérateurs des biofiltres pour établir des conditions aérobies dans les zones d'anoxie de l'installation de traitement biologique et,
- mise en parallèle des biofiltres ;
ces moyens permettant en outre un retour aux conditions normales de fonctionnement lors d'une décroissance du débit revenant à sa valeur nominale en déclenchant les opérations suivantes :
- remise en série des biofiltres (3-4-5) et lavage du biofiltre (4) affecté à la nitrification pour éliminer la flore hétérotrophe et faire réapparaître la flore autotrophe ramenant ainsi le lit bactérien à son fonctionnement en nitrification et,
- arrêt de l'aération des biofiltres de dénitrification pour un retour normal à leur fonctionnement.

## Claims

1. Process for the biological purification of waste waters, using biological filters with fixed cultures, enabling either a complete treatment of the carbonaceous pollution and of the nitrogenous pollution to be assured at nominal flow rate or the elimination of the biological oxygen demand or BOD alone during a large increase in the nominal flow rate, notably in the case of rainfall,
characterized in that,
at nominal flow rate:
- the water to be treated passes through the biological filters having fixed cultures operating in series, assuring the elimination of the BOD, the denitrification and the nitrification; in the case of a large increase above the nominal flow rate:
- said fixed cultures, operating normally in denitrification, are supplied with raw water while at the same time dissolved oxygen is added to cause a modification to the enzymatic system of the bacteria of the flora present in the bacterial film of the culture so that, the bacteria consuming the free oxygen, the fixed culture assures the elimination of the BOD from the raw water and, in parallel;
- the fixed culture, operating normally in nitrification, is supplied with raw water so that it develops a heterotrophic flora above the autotrophic flora that has become inactive, said fixed culture being thus assigned to the elimination of the BOD and,
during a return to normal operating conditions when a decrease of the flow rate occurs towards its nominal value:
- the supply of free oxygen to the fixed culture normally assigned to the denitrification is interrupted, thus forcing the bacteria to restore their initial enzymatic system, that is to say to return to their initial operation in denitrification and,
- a washing of the fixed culture normally assigned to the nitrification is carried out, in order to eliminate the heterotrophic flora to cause the autotrophic flora to reappear, thus assuring a return to the normal nitrification operation.

2. Biological purification apparatus for waste waters for carrying out the process according to Claim 1, characterized in that it comprises:
- a pretreatment apparatus (1) for desanding, screening and degreasing, supplied with water at nominal flow rate;
- a settling installation (2) designed to be able to function without an addition of reagents when it is supplied at nominal flow rate after the water to be treated has passed through the pre-treatment installation (1) and with the addition of reagents when it is supplied directly at the peak flow rate, that is to say at a rate several times higher than the nominal flow rate, for example in the case of a storm;
- a biological treatment installation with fixed cultures, over which the treated water then passes, this installation comprising biological filters assuring the elimination of the BOD (3), the denitrification (3-5) and the nitrification (4), normally connected in series, means enabling said biological filters to be connected in parallel while nominal flow rate is exceeded and means allowing a regulation of the air flow rate to be performed for establishing aerobic conditions in the anoxic zones in the case of an increase in the flow rate and for stopping the aeration of the biological filters in the case of a decrease in the flow rate during a return to the nominal flow rate and,
- means for detecting a massive increase in the flow rate, notably in the case of a storm, designed so as to initiate the following operations:
- starting-up of the addition of the reagents to the settling installation (2);
- sequential starting-up of all the aerators of the biological filters for establishing aerobic conditions in the anoxic zones of the biological treatment installation and,
- connecting of the biological filters in parallel;
these means making possible, furthermore, a return to the normal operating conditions during a decrease in the flow rate returning to its nominal value by initiating the following operations:
- reconnection in series of the biological filters (3-4-5) and washing of the biological filter (4) assigned to the nitrification for the purpose of eliminating the heterotrophic flora and causing the reappearance of the autotrophic flora, thus bringing the bacterial bed back to its nitrification functioning and,
- stopping of the aeration of the denitrification biological filters for a normal return to their functioning.

## Patentansprüche

1. Vefahren zur biologischen Reinigung von Abwässern, bei dem Biofilter mit fixierten Bakterienkulturen Anwendung finden, und mit dem einerseits eine vollständige Behandlung der Kohlenstoffverschmutzung und der Stickstoffverschmutzung bei einem nominalen Durchsatz und andererseits die Eliminierung des biologischen Bedarfes an Sauerstoff (demande biologique en oxygène oder auch DBO genannt) lediglich bei einer beträchtlichen Erhöhung des nominalen Durchsatzes, insbesondere bei Regenfällen, sichergestellt wird,
dadurch **gekennzeichnet**,
daß bei nominalem Durchsatz:
- das zu behandelnde Wasser die Biofilter mit fixierten Kulturen durchläuft, die in Serie geschaltet sind und die Eliminierung des DBO, die Denitrifikation und die Nitrifikation sicherstellen;
daß im Falle einer beträchtlichen Erhöhung des nominalen Durchsatzes:
- man die fixierten Kulturen, die normalerweise bei der Denitrifikation eingesetzt sind, direkt mit Rohwasser versorgt, wobei gleichzeitig gelöster Sauerstoff zugeführt wird, um eine Modifikation des enzymatischen Systems der in dem Bakterienfilm der Kultur vorhandenen Bakterien des Flors hervorzurufen, damit die Bakterien den freien Sauerstoff verbrauchen und die fixierte Kultur die Eliminierung des DBO vom Rohwasser sicherstellt,
- und man gleichzeitig die fixierte Kultur, die normalerweise für die Nitrifikation eingesetzt wird, mit Rohwasser versorgt, damit sie einen heterotrophen Flor unterhalb des inaktiv gewordenen autotrophen Flors entwickelt, wodurch diese fixierte Kultur zur Eliminierung des DBO beiträgt,
und daß bei einer Rückkehr zu normalen Funktionsbedingungen bei einer Abnahme des Durchsatzes auf seinen nominalen Wert:
- man die Versorgung der fixierten Kultur, die normalerweise der Denitrifikation zugeordnet ist, mit freiem Sauerstoff unterbricht, wodurch die Bakterien gezwungen werden, ihr ursprüngliches enzymatisches System wieder zu restaurieren, d.h, ihre ursprüngliche Funktion bei der Denitrifikation wiederaufzunehmen,
- und man die fixierte Kultur, die normalerweise der Nitrifikation zugeordnet ist, wäscht, um den heterotrophen Flor zu entfernen, so daß der autotrophe Flor wieder erscheinen kann, wodurch eine Rückkehr zur ursprünglichen Funktion der Nitrifikation sichergestellt wird.

2. Vorrichtung für die biologische Reinigung von Abwässern zur Durchführung des Verfahrens nach Anspruch 1,
dadurch **gekennzeichnet**,
daß sie aufweist:
- eine Vorrichtung 1 zur Vorbehandlung - Entsanden, Rechenreinigung und Entfetten -, die mit einem nominalen Durchsatz an Wasser versorgt wird;
- eine Dekantiervorrichtung 2, die derart konzipiert ist, daß sie ohne Zugabe von Reagentien funktionieren kann, wenn sie mit dem nominalen Durchsatz versorgt wird, nachdem das zu behandelnde Wasser die Vorbehandlungsvorrichtung 1 passiert hat, und die unter Zugabe von Reagentien funktionieren kann, wenn sie direkt mit einem Spitzendurchsatz versorgt wird, der um ein Vielfaches größer ist als der nominale Durchsatz, beispielsweise im Falle eines Gewitters;
- eine Vorrichtung zur biologischen Behandlung mit fixierten Kulturen, die dann das behandelte Wasser durchläuft, wobei diese Vorrichtung Biofilter, die die Eliminierung des DBO (3), die Denitrifikation (3-5) und die Nitrifikation (4) sicherstellen und normalerweise in Reihe geschaltet sind, Mittel, durch die diese Biofilter bei einem Überschreiten des nominalen Durchsatzes parallel geschaltet werden können, und Mittel aufweist, durch die der Luftdurchsatz reguliert werden kann, um in den sauerstofffreien Zonen im Falle einer Durchsatzerhöhung aerobe Konditionen zu schaffen, und um die Belüftung der Biofilter im Falle einer Abnahme des Durchsatzes bei einer Rückkehr zum nominalen Durchsatz zu stoppen und
- Mittel zum Detektieren einer massiven Erhöhung des Durchsatzes, insbesondere im Falle eines Gewitters, die folgende Operationen auslösen können:
- Starten der Zugabe der Reagentien für die Dekantierung (2);
- in Reihe Schalten aller Belüfter der Biofilter, um aerobe Bedingungen in den sauerstofffreien Zonen der Vorrichtung zur biologischen Behandlung zu etablieren, und
- Parallelschalten der Biofilter,
wobei diese Mittel außerdem eine Rückkehr zu normalen Funktionsbedingungen bei einer Abnahme des Durchsatzes auf seinen nominalen Wert ermöglichen, indem sie die folgenden Operationen auslösen:
- erneutes in Reihe Schalten der Biofilter (3-4-5) und Waschen des Biofilters (4), der der Nitrifikation zugeordnet ist, um den heterotrophen Flor zu entfernen und den autotrophen Flor wieder erscheinen zu lassen, wodurch das Bakterienbett wieder zu seiner Nitrifikationsfunktion zurückgeführt wird, und
- Stoppen der Belüftung der Biofilter zur Denitrifikation, damit sie ihren Normalbetrieb wiederaufnehmen.
